Europäisches Patentamt

European Patent Office

Office européen des brevets

(19)

(11) Numéro de publication : **0 136 190 B1**

(12)

# FASCICULE DE BREVET EUROPÉEN

(45) Date de publication du fascicule du brevet :
25.03.87

(51) Int. Cl.⁴ : **B 23 K 37/04, B 23 K 26/00**

(21) Numéro de dépôt : **84401181.7**

(22) Date de dépôt : **17.07.84**

(54) Installation de soudage à points multiples, notamment pour carrosserie de véhicule.

(30) Priorité : **27.07.83 FR 8312441**

(43) Date de publication de la demande :
**03.04.85 Bulletin 85/14**

(45) Mention de la délivrance du brevet :
**25.03.87 Bulletin 87/13**

(84) Etats contractants désignés :
**DE GB IT SE**

(56) Documents cités :
**DE-A- 2 538 960**
**FR-A- 2 483 285**

(73) Titulaire : **SCIAKY S.A. Société dite:**
**119 quai Jules Guesde**
**F-94400 Vitry sur Seine (Val de Marne) (FR)**

(72) Inventeur : **Sciaky, Mario**
**46 rue Fabert**
**Paris (FR)**
Inventeur : **Cazes, Roland**
**6 rue de Marinville**
**Saint Maur (Val de Marne) (FR)**
Inventeur : **Sayegh, Georges**
**41 rue de Gergovie**
**Paris (FR)**

(74) Mandataire : **Cabinet BERT, DE KERAVENANT & HERRBURGER**
**115, Boulevard Haussmann**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne une installation de soudage à points multiples, notamment pour carrosserie de véhicule automobile.

L'assemblage entre elles de pièces en tôles de carrosseries automobiles s'effectue sur des machines à points multiples, aujourd'hui classiques, mettant en œuvre le soudage par résistance.

Un tel assemblage nécessite d'être exécuté dans une machine qui comporte essentiellement plusieurs éléments de conformation dont la forme est adaptée, pour chacun, à une zone déterminée des pièces à assembler et dont le rôle est d'assurer le positionnement des pièces l'une par rapport à l'autre et par rapport aux têtes de soudage mobiles ainsi que leur serrage, c'est-à-dire d'assurer la géométrie correcte de l'assemblage au moment de la soudure.

Les éléments de soudage mobiles viennent alors, lors du soudage, s'intercaler par leur tête de travail entre les zones libres laissées entre les éléments de conformation et l'ensemble donne lieu à ce qu'il est convenu d'appeler l'outillage de soudage spécifique des pièces à assembler.

Un tel outillage comporte nécessairement deux parties conjuguées dont l'une est active et l'autre réactive, qui s'ouvrent pour pouvoir introduire les pièces avant soudage, se referment intimement pour les positionner et les serrer et permettre les opérations de soudage, puis s'ouvrent de nouveau pour les extraire.

Ce type d'installation de soudage, tel que défini dans le préambule de la revendication 1 est connu de l'art antérieur.

Cependant, les outillages de soudage par points sont compliqués et nécessitent de longues heures d'études, de fabrication, de montage et de réglage, etc. La mise en œuvre de robots en vue de rendre les opérations d'assemblage moins spécifiques et plus flexibles ne résout que partiellement le problème.

En effet, contrairement à une installation à points multiples où tous les points de soudure peuvent être réalisés simultanément donnant lieu à un temps opératoire court, la mise en œuvre d'un ou plusieurs robots se heurte à trois difficultés essentielles :

le temps de passage d'une position à la suivante de l'outil de soudage manœuvré par robot est prépondérant,

la présence d'éléments de serrage et d'éléments de positionnement des pièces complique et allonge les temps de mise en place de l'outil au droit de chaque point de soudure,

la cohabitation de plusieurs robots afin de réduire le travail de chacun d'eux, n'est souvent pas possible du point de vue physique.

La présente invention a notamment pour but de remédier à ces inconvénients et concerne à cet effet une installation de soudage à points multiples, notamment pour carrosserie de véhicule automobile, comportant des moyens de positionnement des pièces à souder l'une par rapport à l'autre, des moyens de serrage de ces pièces et des moyens pour le soudage des pièces positionnées et serrées en des points déterminés de ces pièces, ces moyens de positionnement et de serrage étant pourvus de surfaces de butée dont la forme est adaptée à la forme des pièces, installation caractérisée en ce que les moyens de positionnement sont constitués par un poinçon et une matrice dont la forme correspond, pour chacun, à au moins une partie de l'une des pièces à souder, ces poinçon et matrice constituant également les moyens de serrage des pièces, en ce que le poinçon ou la matrice possède des dégagements débouchant sur les surfaces de butée au droit des pièces, en ce qu'elle comporte plusieurs têtes de soudage à faisceau laser, assurant la focalisation d'un faisceau laser sur les pièces, les têtes étant fixées sur le poinçon ou la matrice au droit de ces dégagements, et en ce que ces têtes sont alimentées par une même source de faisceau laser, des moyens de distribution du faisceau laser étant prévus entre la source et ces têtes pour orienter le faisceau laser successivement vers chacune des têtes, lorsque les pièces sont positionnées et serrées par le poinçon et la matrice, afin de réaliser successivement la soudure par point de ces pièces à hauteur de dégagement.

L'invention est représentée à titre d'exemples non limitatifs sur les dessins ci-joints, dans lesquels :

la figure 1 est une vue en coupe schématique partielle d'une installation conforme à l'invention ;

la figure 2 est une vue en perspective partielle de l'installation de la figure 1 ;

les figures 3, 4 et 5 représentent de manière schématique trois modes de distribution d'un faisceau laser vers les têtes de soudage ;

la figure 6 représente en perspective schématique un exemple de réalisation d'une distribution du faisceau laser à l'aide d'un miroir pivotant ;

les figures 7 et 8 représentent en perspective schématique, deux exemples de réalisation d'une distribution d'un faisceau laser, à plusieurs miroirs alignés ;

la figure 9 est une vue en coupe latérale partielle d'une installation de soudage à points multiples, mise en œuvre pour le soudage d'une porte de véhicule automobile ;

la figure 10 est une vue schématique suivant A-A de la figure 9 ;

la figure 11 est une vue en perspective d'une installation conforme à l'invention pour le pointage ou le soudage des éléments fixes d'une carrosserie de véhicule automobile ;

la figure 12 est une coupe partielle suivant B-B de la figure 11,

la figure 13 est une vue en élévation représentant une installation conforme à l'invention assurant le soudage simultané de trois modèles de carrosseries, identiques ou différents, disposés dans une ligne de transfert unique.

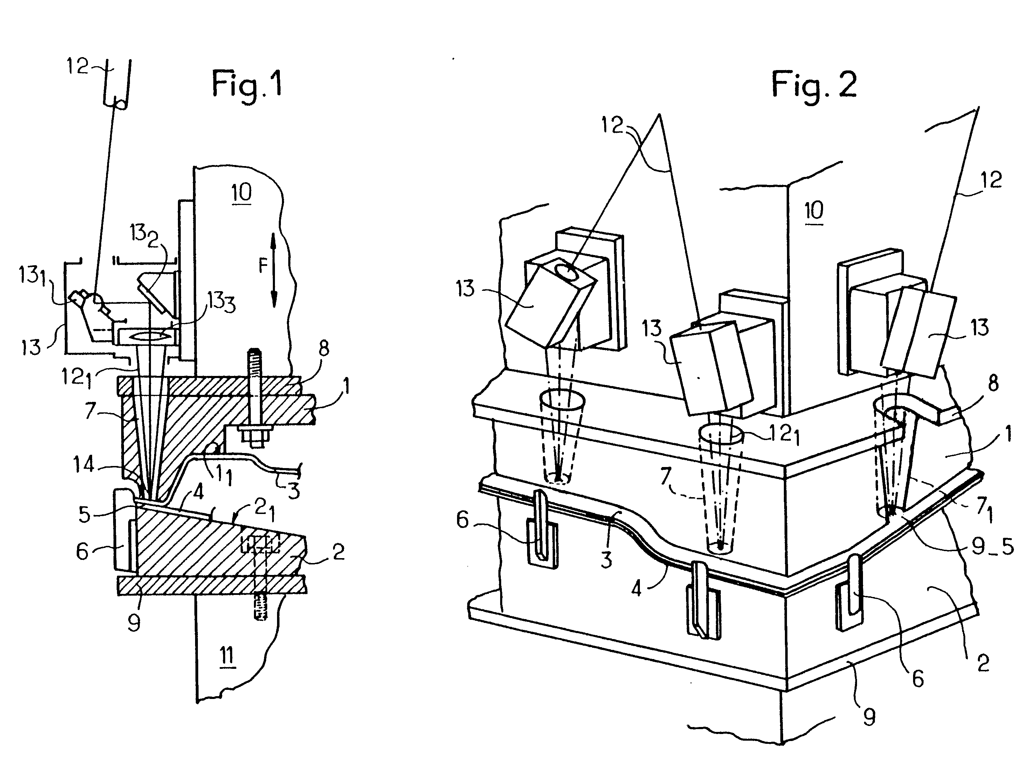

Suivant l'exemple de réalisation représenté sur la figure 1, l'installation comprend des moyens de positionnement et de serrage qui sont constitués par un poinçon 1 et une matrice 2, mobiles l'un par rapport à l'autre pour venir positionner et serrer les deux pièces à souder 3 et 4, les faces en regard $1_1$ et $2_1$ de ces poinçon et matrice étant à cet effet réalisées à la forme des pièces 3 et 4 afin de les positionner l'une par rapport à l'autre et de les serrer l'une contre l'autre en 5 à leur périphérie.

La matrice 2 comporte également dans l'exemple représenté des drageoirs 6 disposés latéralement afin de coopérer au positionnement des pièces.

Dans l'exemple représenté, le poinçon 1 et la matrice 2, réalisés en matériau métallique ou autres, tels que des matières plastiques ou composites, constituent les seuls éléments de positionnement et de serrage des pièces 3 et 4 et la forme des surfaces de butée $1_1$ et $2_1$ pourra donc aisément et directement être obtenue par usinage à partir d'un calculateur dans lequel est introduite la représentation informatisée des pièces 3 et 4 à assembler.

Dans l'exemple représenté, le poinçon 1 comporte des dégagements 7 réalisés sous la forme d'orifices qui le traversent de part en part et qui débouchent sur la surface de butée $1_1$ adaptée à la forme de la pièce 3 et à hauteur de la zone 5 de serrage des deux pièces 3 et 4 l'une sur l'autre.

Cette cavité 7 permettra, comme on l'expliquera ci-après, l'exécution du point de soudure en 5, mais on notera, dès à présent que la position de cette cavité 7 déterminant la position du point de soudure pourra aisément être déterminée à partir du calculateur, lors de l'usinage du poinçon et se trouve donc directement positionnée par rapport à ce poinçon et plus particulièrement par rapport à sa surface de butée $1_1$.

Les poinçon et matrice 1, 2 sont fixés sur des platines 8, 9 associées aux portiques 10, 11 d'une presse à souder, ces portiques étant mobiles l'un par rapport à l'autre dans la direction F afin de pouvoir écarter les poinçon et matrice 1, 2 pour permettre la mise en place des pièces 3 et 4 et afin de pouvoir rapprocher ces poinçon et matrice pour positionner et serrer les pièces 3, 4 l'une contre l'autre et effectuer l'opération de soudage par point.

Cette opération de soudage est effectuée à l'aide d'un faisceau laser 12, issu d'un générateur non représenté, et qui pénètre dans une tête de soudage 13 fixée au portique 10 et donc au poinçon 1, cette tête de soudage 13 assurant la focalisation du faisceau laser émergeant $12_1$ en 14 sur la zone 5 des pièces 3 et 4 superposées.

On remarquera que cette combinaison de moyens permettra un positionnement rapide et précis de la tête de soudage 13 pour qu'elle réalise le point de soudage désiré en 5 étant donné que les pièces 3, 4 sont positionnées par rapport aux poinçon et matrice 1, 2 et donc par rapport à la cavité 7 ainsi qu'à la tête de soudage 13 qui est fixée par rapport au poinçon 1.

Dans l'exemple représenté, la tête de soudage 13 comprend un premier miroir pivotant et donc réglable $13_1$ qui renvoie le faisceau laser 12 sur un miroir fixe $13_2$ puis sur un moyen de focalisation constitué par une lentille $13_3$.

Suivant la figure 2, on constate que l'ensemble poinçon 1, platine 8 et portique 10 supportent trois têtes de soudage 13 assurant la focalisation du faisceau laser incident 12, ce faisceau provenant soit d'un même générateur de faisceau laser, soit de générateurs différents.

Ces têtes de soudage 13 sont orientées en fonction du faisceau laser incident afin de projeter le faisceau focalisé émergeant $12_1$ au travers de la cavité 7.

Suivant la position du point de soudure à réaliser sur les pièces et suivant la forme plus ou moins complexe des poinçon et matrice 1, 2, le dégagement permettant le passage du faisceau laser pourra être réalisé sous la forme d'un évidement latéral comme représenté en $7_1$ au lieu de constituer une cavité 7 formée entièrement à l'intérieur du poinçon 1.

Egalement si cela est possible, compte tenu de la forme des pièces et de la position désirée des points de soudure, le poinçon pourra être en retrait de la périphérie des pièces et dans le faisceau laser issu des têtes fixes, longera le bord latéral du poinçon ou de la matrice afin d'être focalisé dans le dégagement formé par l'espace entre le bord des pièces et le bord du poinçon.

Etant donné que les postes de soudage 13 occupent une position fixe par rapport aux moyens de positionnement et de serrage constitués par les poinçon 1 et matrice 2 et par rapport aux cavités 7 permettant le passage du faisceau laser, ces postes de soudage fixes les uns par rapport aux autres, pourront être alimentés successivement par un faisceau laser issu d'un même générateur.

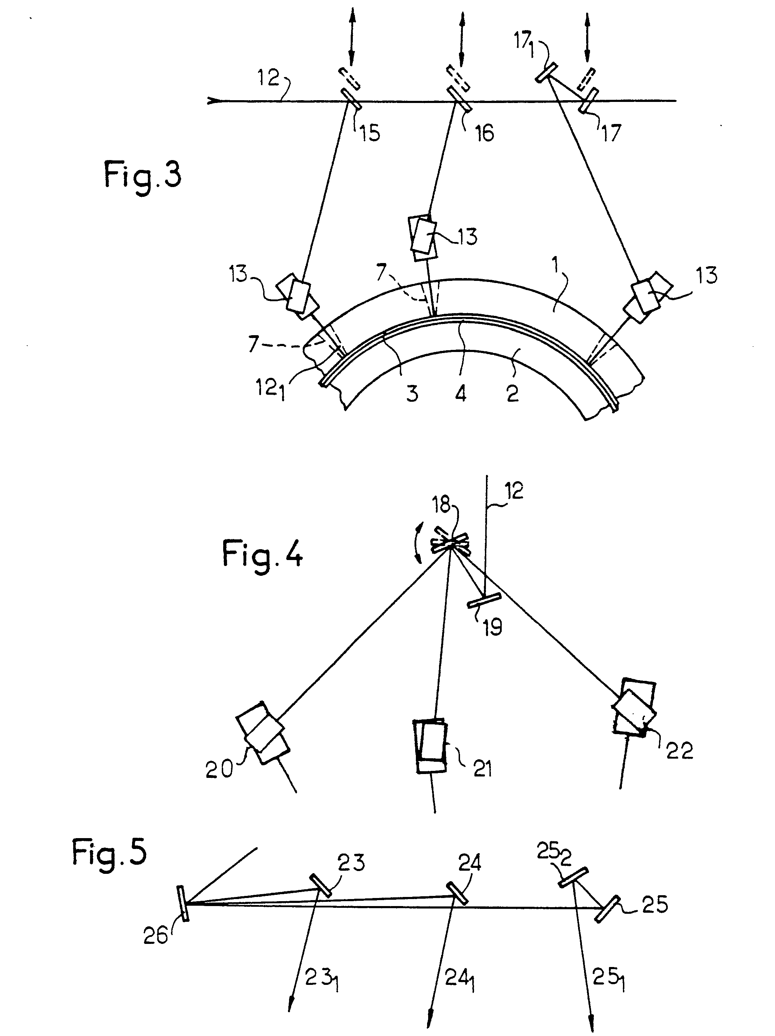

Ainsi, suivant la figure 3, le faisceau laser incident 12 est amené sur un ensemble de distribution comprenant des miroirs 15, 16 et 17 qui sont susceptibles d'être placés successivement sur le trajet du faisceau 12 afin de renvoyer chacun ce faisceau laser vers un poste de soudage déterminé 13. Ce miroir pourra, soit réfléchir directement le faisceau sur son poste de soudage 13 comme c'est le cas pour les miroirs 15 et 16, soit au contraire le réfléchir vers un miroir intermédiaire $17_1$, comme c'est le cas du miroir 17 et cela en fonction de l'orientation du faisceau incident 12 et de la position du poste de soudage 13 considéré.

Dans l'exemple de réalisation de la figure 4, au contraire, il est prévu un seul miroir 18 qui reçoit le faisceau incident 12, par exemple après réflexion sur un miroir intermédiaire 19, le miroir 18 étant successivement positionné angulairement afin de réfléchir le faisceau laser successivement sur les postes de soudage 20, 21 et 22.

Dans l'exemple de réalisation de la figure 5, l'ensemble de distribution se compose de trois miroirs 23, 24 et 25 légèrement décalés les uns par rapport aux autres, et qui reçoivent successivement le faisceau laser réfléchi par un miroir 26, pivotant dans les directions $23_1$, $24_1$ et $25_1$ correspondant chacune à un poste de soudage. Dans cette réalisation, l'angle de pivotement du miroir 26 est faible compte tenu du décalage des miroirs fixes 23, 24 et 25, l'un ou plusieurs de ces miroirs pouvant également renvoyer leur faisceau réfléchi sur un miroir intermédiaire comme cela est représenté en $25_2$ sur cette figure 5.

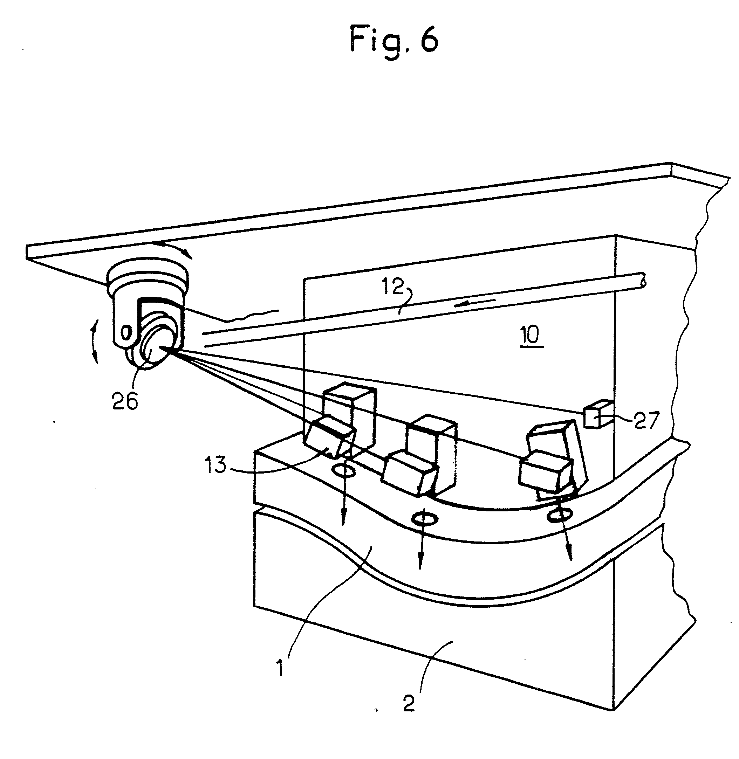

Suivant la figure 6, on a représenté en perspective une installation dont les têtes de soudage 13 fixées au portique 10 du poinçon 1, reçoivent successivement le faisceau laser 12 après réflexion sur un miroir 26 pivotant par deux axes orthogonaux entraînés par des moteurs commandés à partir d'un programme d'un ordinateur.

Dans ce cas, le portique 10 comporte de préférence une cible 27 dont la position dans l'espace est déterminée par rapport aux têtes de soudage 13, cette position étant introduite dans l'ordinateur de façon que le miroir 26 puisse utiliser cette cible 27 comme référence pour s'orienter convenablement et successivement vers les divers postes de soudage 13.

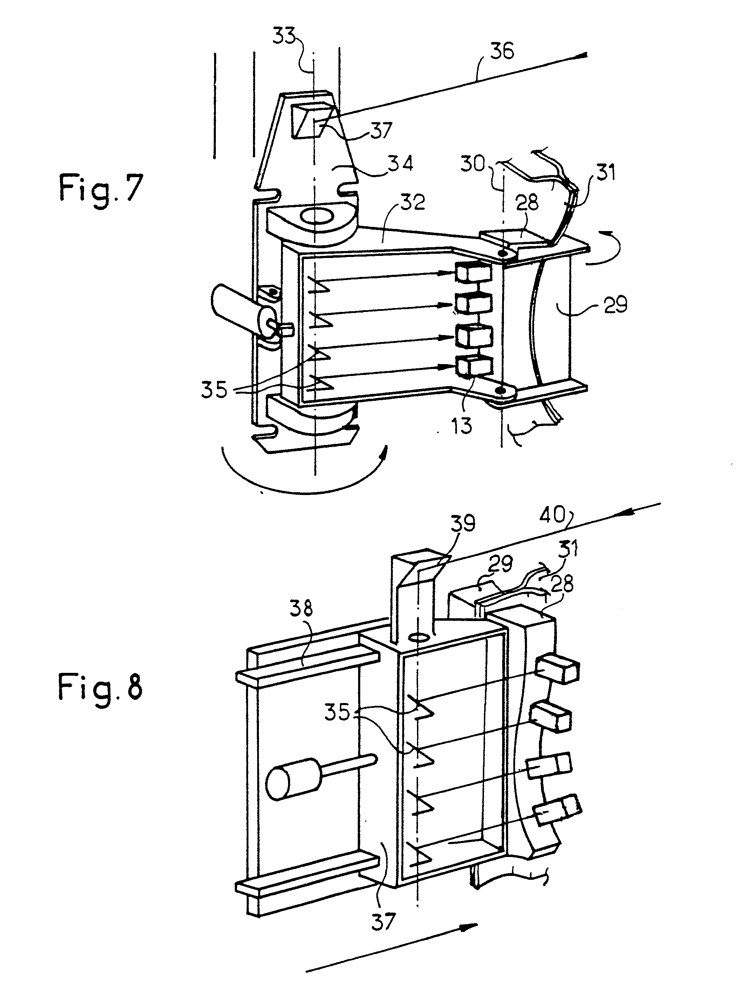

Dans l'exemple de réalisation de la figure 7, les têtes de soudage 13 sont fixées sur un moyen de positionnement et de serrage qui se compose d'une forme 28 et d'une contreforme 29 pivotant l'une sur l'autre suivant un axe 30 afin de venir positionner et serrer les pièces à souder 31.

Cet ensemble de positionnement et de serrage est supporté par un bâti 32 monté pivotant suivant un axe 33 sur un support 34. Dans cet exemple, le bâti 32 comporte plusieurs miroirs 35 escamotables, alignés suivant l'axe de pivotement 33, et qui sont susceptibles de recevoir, successivement, le faisceau laser incident 36 réfléchi par un miroir 37 fixé sur le support 34 et passant par l'axe 33.

Dans ce cas également, les faisceaux laser réfléchis successivement par les miroirs 35, sont amenés sur les postes de soudage 13 qui focalisent les faisceaux au travers des cavités correspondantes prévues dans la forme 28 afin de réaliser le soudage des pièces 31.

Dans l'exemple de réalisation de la figure 8, la forme 28 est mobile par translation et est supportée par un bâti 37 coulissant sur des glissières 38. Les miroirs escamotables alignés 35 reçoivent successivement le faisceau laser, par l'intermédiaire d'un miroir 39 solidaire du bâti 37 et donc de la forme 28, le faisceau laser incident 40 venant frapper le miroir 37 et successivement les miroirs 35 lorsque la forme 38 positionne et serre les pièces à souder l'une par rapport à l'autre en coopération avec une contreforme.

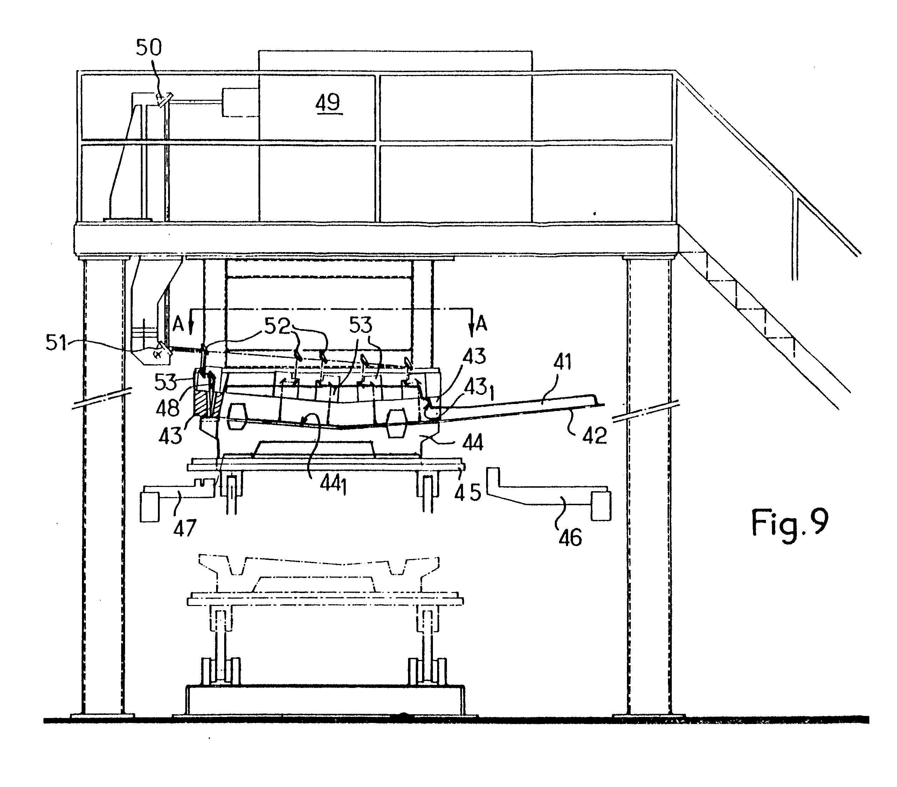

L'installation représentée sur la figure 9 est destinée au positionnement, au serrage et au soudage des deux panneaux 41, 42 d'une porte de véhicule automobile, l'outillage de positionnement et de serrage étant constitué par les ensembles dénommés poinçon 43 et matrice 44 dont les faces en regard $43_1$ et $44_1$ sont dessinées pour correspondre à celles des panneaux 41 et 42 afin de les positionner et de les serrer correctement lors du rapprochement de ces poinçon et matrice.

Dans cet exemple, le poinçon 43 est fixe et la matrice 44 est montée sur un plateau de presse mobile 45 susceptible de se déplacer entre une position haute de positionnement et de serrage (représentée en traits pleins) et une position basse (représentée en pointillés) destinée à permettre le chargement des deux panneaux 41 et 42 sur la presse puis l'évacuation de la porte dont les deux panneaux sont soudés de manière partielle ou complète.

Lors de l'ouverture de la presse, les panneaux de porte ou la porte assemblée seront supportés par des supports 46, 47 intégrés à une ligne de transfert.

Dans cet exemple, les cavités 7 permettant le passage du faisceau laser focalisé 48, sont prévues sur le poinçon fixe 43, ce faisceau provenant d'un générateur de faisceau laser 49 après réflexions successives sur des miroirs 50, 51, 52. Le faisceau est ensuite introduit dans les postes de soudage 53 qui focalisent le faisceau 48 dans les zones de soudage des deux pièces 41 et 42 et cela au travers des cavités correspondantes 7, ces cavités débouchant sur la surface $44_1$ à hauteur des pièces superposées.

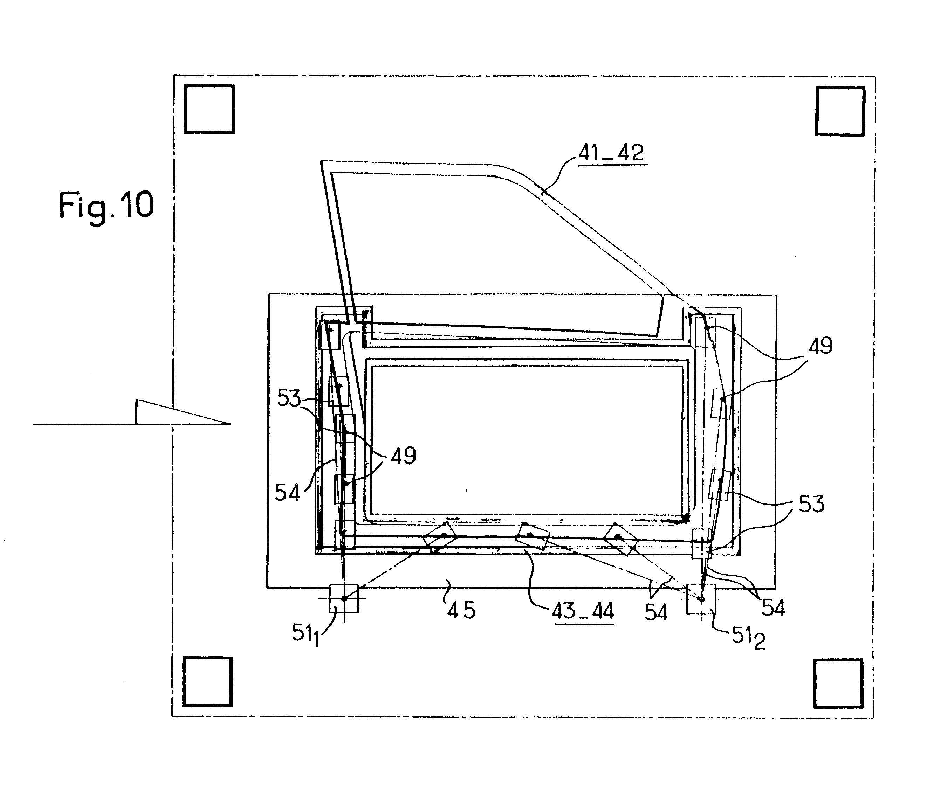

Comme cela est représenté en plan et plus en détail sur la figure 10, l'ensemble des postes de soudage 53 est alimenté par deux ensembles de distributions $51_1$ et $51_2$ dans lesquels sont incorporés des miroirs 51 orientables dans des directions différentes 54 à partir d'un calculateur, afin d'alimenter successivement les divers postes de soudage 53 répartis à la périphérie du poinçon 43.

Contrairement aux figures 9 et 10, les figures 11 et 12 sont un exemple de réalisation de l'installation pour le soudage des éléments constitutifs essentiels d'une carrosserie de véhicule automobile.

Dans ce cas, le poste de soudage comporte deux ensembles latéraux mobiles et identiques 55 (l'un d'entre eux étant uniquement représenté sur la figure 7), ces ensembles étant pourvus de moyens de positionnement et de serrage mobiles tels que 56, qui supportent ensemble les diverses têtes de soudage 57 positionnées à hauteur des cavités prévues dans les moyens de positionnement et de serrage 56.

A chaque ensemble latéral 55 est associé un ou plusieurs générateurs de faisceau laser, ainsi que plusieurs ensembles de distribution 58, 59, 60 et 61 qui renvoient le faisceau laser vers des miroirs 62 associés, chacun, avec un poste de soudage 57, ces miroirs 62 et ces ensembles de distribution 58, 59, 60, 61, fonctionnant de l'une des manières représentées sur les figures de 3 à 8.

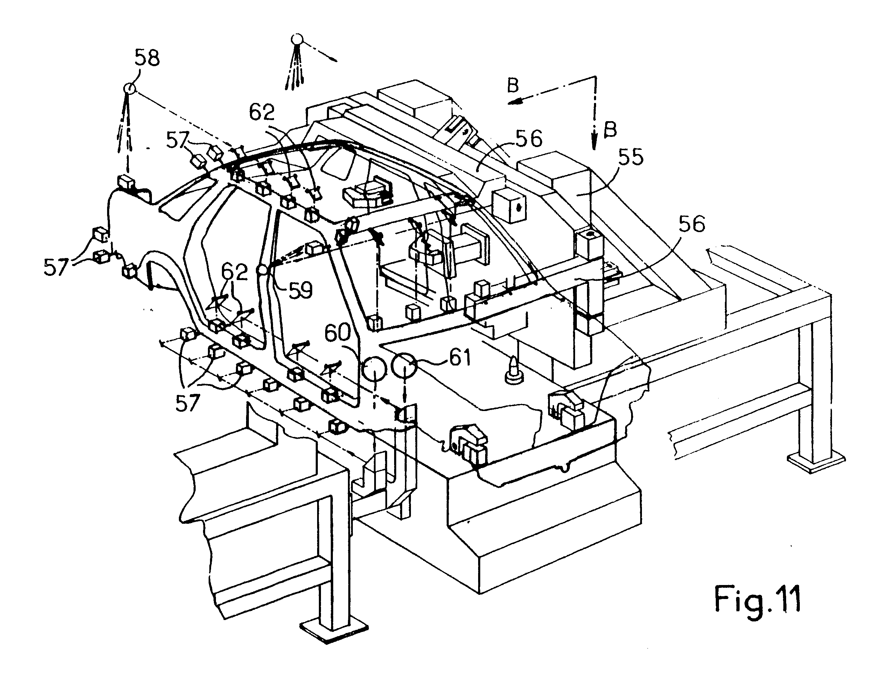

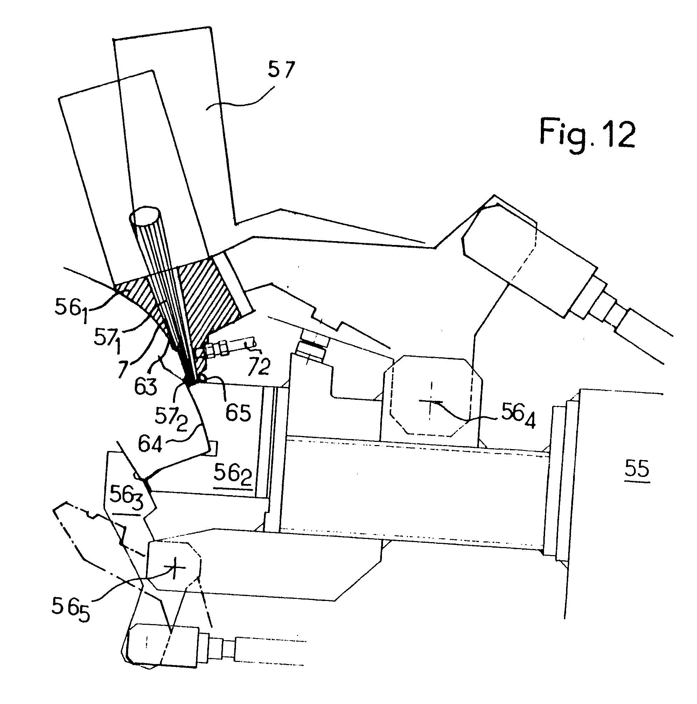

Sur la figure 12 est représenté un détail de l'installation de la figure 11 destiné au positionnement, au serrage et au pointage (ou soudage) du pavillon 63 d'une carrosserie de véhicule, à l'encadrement de portière 64 et à une gouttière 65.

Sur la figure 12 est représentée une canalisation d'arrivée (72) de gaz de protection de la soudure.

On remarque que l'ensemble latéral 55 comporte des organes de serrage et de positionnement $56_1$, $56_2$ et $56_3$, les organes de serrage $56_1$ et $56_3$ étant mobiles par pivotement sous l'action de vérins autour d'axes $56_4$ et $56_5$.

Sur cette figure 12, un poste de soudage 57 fixé à l'organe de serrage et de positionnement $56_1$ a été représenté, ce poste de soudage 57 produisant le faisceau laser $57_1$ qui est focalisé en $57_2$ à travers la cavité 7 à la jonction des parties de carrosserie 63, 64 et 65.

On notera que l'installation conforme à l'invention implique la réalisation d'ensembles comprenant à la fois les outillages de positionnement et/ou de serrage et les outillages de soudage qui sont fixés les uns par rapport aux autres afin de constituer des ensembles d'outillages spécifiques au soudage de pièces déterminées et, par exemple, de pièces de carrosserie de véhicule automobile.

Ainsi, un poste de soudage de carrosserie de véhicule automobile comportera des ensembles de travail latéraux comportant chacun plusieurs ensembles d'outillage 56 afin de coopérer ensemble au pointage ou au soudage des pièces d'une carrosserie de véhicule 66.

Egalement, du fait de la conception de l'installation conforme à l'invention, plusieurs postes de soudage 67, 68 et 69 pourront être prévus dans une même ligne de fabrication, chacun de ces postes comportant l'outillage ci-dessus défini spécifique à la réalisation d'un type de carrosserie (différent ou identique), ces postes étant insérés dans une ligne unique de transfert 70 pour leur alimentation.

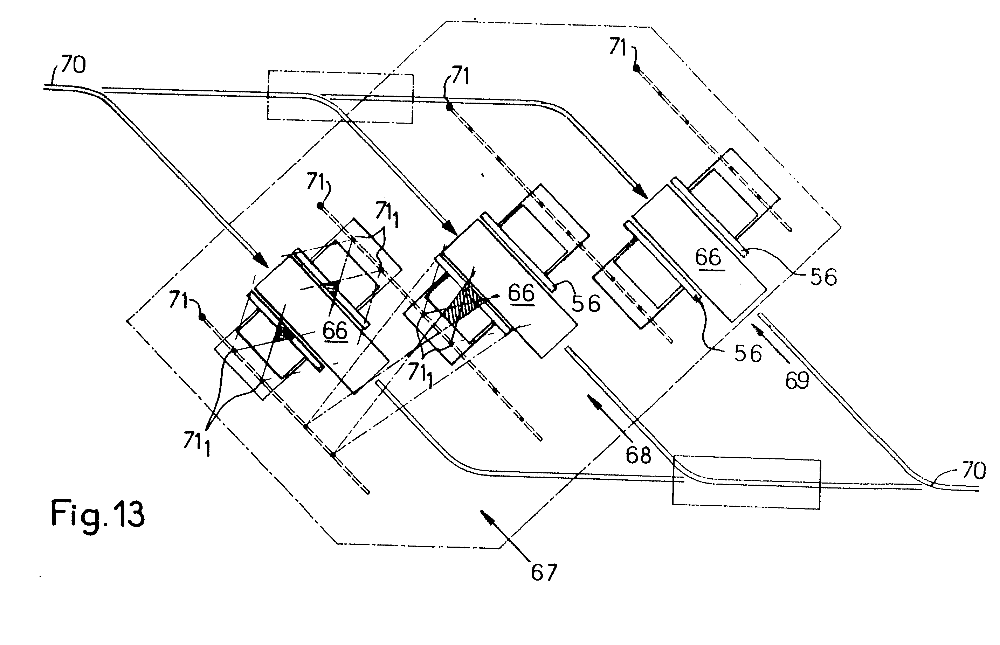

Egalement, comme on le remarque sur la figure 13, les trois stations de soudage disposées en parallèle sont alimentées à partir de quatre générateurs de faisceau laser 71 qui dirigent le faisceau laser successivement sur plusieurs postes de distribution $71_1$, les postes de distribution $71_1$ alimentés par un même générateur de faisceau laser pouvant intéresser plusieurs postes de soudage 67, 68, 69.

**Revendications**

1. Installation de soudage à points multiples, notamment pour carrosserie de véhicule automobile, comportant des moyens de positionnement des pièces (3, 4) à souder l'une par rapport à l'autre, des moyens de serrage de ces pièces (3, 4) et des moyens (13) pour le soudage des pièces positionnées et serrées en des points déterminés de ces pièces, ces moyens de positionnement et de serrage étant pourvus de surfaces de butée $(1_1, 2_1)$ dont la forme est adaptée à la forme des pièces, installation caractérisée en ce que les moyens de positionnement sont constitués par un poinçon et une matrice (1, 2) dont la forme correspond, pour chacun, à au moins une partie de l'une des pièces à souder (3, 4), ces poinçon et matrice constituant également les moyens de serrage des pièces, en ce que le poinçon ou la matrice possède des dégagements (7) débouchant sur les surfaces de butée $(1_1, 2_1)$ au droit des pièces (3, 4), en ce qu'elle comporte plusieurs têtes de soudage à faisceau laser (13), assurant la focalisation d'un faisceau laser sur les pièces, les têtes étant fixées sur le poinçon ou la matrice au droit de ces dégagements (7), et en ce que ces têtes sont alimentées par une même source de faisceau laser, des moyens de distribution (15, 16, 17, 18, 23, 24, 25) du faisceau laser étant prévus entre la source et ces têtes (13) pour orienter le faisceau laser successivement vers chacune de ces têtes, lorsque les pièces sont positionnées et serrées par le poinçon et la matrice, afin de réaliser successivement la soudure par point de ces pièces à hauteur de dégagement.

2. Installation conforme à la revendication 1, caractérisée en ce que les moyens de distribution sont constitués par un miroir pivotant sous l'action de moteurs dont la commande est assurée par un calculateur, une cible (27) étant fixée sur les moyens de positionnement et/ou de serrage pour constituer un point de référence de l'orientation du faisceau vers les diverses têtes de soudage.

3. Installation conforme à la revendication 1, caractérisée en ce que les moyens de distribution sont constitués par plusieurs miroirs (15, 16, 17) mobiles entre deux positions et susceptibles de se placer successivement dans l'axe du faisceau laser incident issu du générateur de faisceau laser pour envoyer, chacun et successivement, ce faisceau laser vers une tête de focalisation du faisceau réalisant un point de soudure.

4. Installation conforme à la revendication 3, caractérisée en ce que les miroirs escamotables sont fixés sur les moyens de positionnement.

5. Installation conforme à l'une quelconque des revendications précédentes, caractérisée en ce que le moyen de positionnement et/ou de serrage est mobile par pivotement et les miroirs sont disposés suivant l'axe de pivotement du moyen de positionnement.

**Claims**

1. A multi-point welding appliance, in particular for car vehicle bodies, comprising means for positioning the pieces (3, 4) to be welded relative to one another, means for clamping said pieces (3, 4), and means (13) for welding the positioned and clamped pieces at predetermined points thereof, the positioning and clamping means being provided with abutting surfaces $(1_1, 2_1)$, the shape of which is adapted to the shape of the pieces, characterised in that the positioning means consist of a ram and a matrix (1, 2), the shape of each of which corresponds to at least a part of one of the pieces to be welded (3, 4), said ram and matrix also constituting clamping means for the pieces ; that the ram or the matrix is provided with openings (7) which lead to the

abutting surfaces ($1_1$, $2_1$) at right angles to the pieces (3, 4) ; that it is provided with a plurality of laser beam welding heads (13), thus ensuring that a laser beam is focused on the pieces, where said heads are fixed to the ram or the matrix at right angles to the openings (7) ; and that said heads are supplied from a common laser beam source, the distribution means (15, 16, 17, 18, 23, 24, 25) for the laser beam being arranged between the source and the head (13) so as to direct the laser beam towards each of the heads in turn when the pieces are positioned and clamped by the ram and the matrix, so as to carry out successive spot welding of said pieces, at the level of the openings.

2. An appliance according to Claim 1, characterised in that the distribution means consist of a pivoting mirror driven by motors which are controlled by a computer, where a collector electrode (27) is fixed to the positioning and/or clamping means to represent a reference point for directing the beam towards the various welding heads.

3. An appliance as claimed in Claim 1, characterised in that the distribution means consist of a plurality of mirrors (15, 16, 17) movable between two positions and which can be successively positioned in the axis of the incident laser beam emitted from the laser beam generator in order successively to direct the laser beam towards a beam focusing head so as to carry out a spotweld.

4. An appliance as claimed in Claim 3, characterised in that collapsible mirrors are fixed to the positioning means.

5. An appliance as claimed in any of the preceding claims, characterised in that the positioning and/or clamping means is pivotable and the mirrors are arranged according to the pivot axis of the positioning means.

**Patentansprüche**

1. Vielpunktschweißanordnung, insbesondere für Fahrzeugkarosserien, mit einer Einrichtung zur gegenseitigen Positionierung der zu verschweißenden Teile (3, 4), mit einer Einrichtung zur Einspannung der Teile (3, 4) und mit einer Einrichtung (13) zum Verschweißen der positionierten und eingespannten Teile an vorbestimmten Stellen derselben, wobei die Einrichtungen zur Positionierung und zum Einspannen mit Anlageflächen ($1_1$, $2_1$) versehen ist, deren Oberflächengestalt an die Gestalt der Teile angepaßt ist, dadurch gekennzeichnet, daß die Einrichtung zum Positionieren aus einem Stempel und einer Matrize (1, 2) besteht, deren Form jeweils mindestens einem Teil der zu verschweißenden Teile (3, 4) entspricht und die gleichzeitig auch die Einrichtung zum Einspannen der Teile darstellen, daß der Stempel oder die Matrize Ausnehmungen (7) aufweisen, die auf den Anlageflächen ($1_1$, $2_1$) an den Teilen (3, 4) ausmünden, daß die Vielpunktschweißanordnung mehrere Laserstrahlschweißköpfe (13) umfaßt, die einen Laserstrahl auf die Teile fokussieren und an den Ausnehmungen an dem Stempel oder der Matrize befestigt sind, daß die Laserstrahlschweißköpfe von ein und derselben Laserstrahlquelle gespeist werden und daß eine Verteilungsanordnung (15, 16, 17, 18, 23, 24, 25) für den Laserstrahl zwischen der Quelle und den Laserstrahlschweißköpfen (13) vorgesehen ist, mittels deren der Laserstrahl bei zwischen dem Stempel und der Matrize positionierten und eingespannten Teilen nacheinander jedem der Laserstrahlschweißköpfe zuleitbar ist, um nacheinander die Punktschweißung der Teile im Bereich der jeweiligen Ausnehmung zu bewerkstelligen.

2. Vielpunktschweißanordnung nach Anspruch 1, dadurch gekennzeichnet, daß die Verteilungsanordnung aus einem über Rechner gesteuerte Motoren angetriebenen Schwenkspiegel besteht, und daß an der Positioniereinrichtung und/oder der Einspanneinrichtung eine Zielfläche (27) befestigt ist, die als Bezugspunkt für die Orientierung des Laserstrahls auf die verschiedenen Laserstrahlschweißköpfe dient.

3. Vielpunktschweißanordnung nach Anspruch 1, dadurch gekennzeichnet, daß die Verteilanordnung aus mehreren zwischen zwei Stellungen beweglichen Spiegeln (15, 16, 17) besteht, die sich, veranlaßt durch den Laserstrahlerzeuger, nacheinander in die Achse der Laserstrahls verschieben können, um jeweils nacheinander den Laserstrahl auf einen Fokussierungspunkt zu lenken, der eine Schweißstelle bildet.

4. Vielpunktschweißanordnung nach Anspruch 3, dadurch gekennzeichnet, daß die zurückziehbaren Spiegel an der Positioniereinrichtung befestigt sind.

5. Vielpunktschweißanordnung nach einem der vorangehenden Ansprüche, dadurch gekennzeichnet, daß die Einrichtungen zum Positionieren und/oder Einspannen durch eine Schwenkung bewegbar und die Spiegel auf der Schwenkachse der Einrichtung zum Positionieren angeordnet sind.

Fig. 2

Fig. 1

Fig.3

Fig.4

Fig.5

# Fig. 6

**Fig. 7**

**Fig. 8**

Fig.9

0 136 190

Fig.10

41_42

49

53

49

54

53

54

51₁

45

43_44

54

51₂

0 136 190

6

Fig.11

0 136 190

Fig.12

Fig. 13

0 136 190